# EUROPEAN PATENT APPLICATION

(11) **EP 4 625 655 A1**
(43) Date of publication of application: **01.10.2025**
(21) Application number: 23923050.1
(22) Date of filing: 20.11.2023
(51) Int. Cl.: H01M 50/24, H01M 50/35, A62D 1/00, H01M 50/249

(54) **BATTERY PACK INCLUDING BATTERY MODULE AND VEHICLE INCLUDING SAME**

(30) Priority: 13.02.2023 KR 20230018965
(71) Applicant: LG Energy Solution, Ltd., Seoul 07335 (KR)
(72) Inventor: JANG, Sung-Hwan, Daejeon 34122 (KR); KIM, Kwang-Mo, Daejeon 34122 (KR); SEONG, Jun-Yeob, Daejeon 34122 (KR); JUNG, Hye-Mi, Daejeon 34122 (KR)
(74) Representative: Plasseraud IP
(86) International application number: PCT/KR2023/018655
(87) International publication number: WO 2024/172251

(57) **Abstract**

Disclosed is a battery pack including battery modules and a vehicle including the battery pack. The battery pack includes a plurality of battery modules, each of which includes a battery cell stack in which a plurality of battery cells are stacked, and a module case configured to accommodate the battery cell stack and having at least one movement hole through which flame and gas move; a pack case configured to accommodate the plurality of battery modules so that an exhaust hole is formed between the battery modules and the pack case; and a flame/gas propagation preventing member disposed between the battery modules and the pack case and configured to prevent flame or gas generated from the battery cell from propagating.

## Description

### TECHNICAL FIELD

The present application claims priority to Korean Patent Application No. 10-2023-0018965 filed on February 13, 2023 in the Republic of Korea, the disclosures of which are incorporated herein by reference.

The present disclosure relates to a battery pack including battery modules and a vehicle including the same, and more specifically, to a battery pack including battery modules, which may secure the stability of the battery modules by preventing propagation of flame or gas, and a vehicle including the same.

### BACKGROUND ART

As the technology development and demand for mobile devices increase, demand for secondary batteries as an energy source is rapidly increasing, and nickel cadmium batteries or hydrogen ion batteries have been used as conventional secondary batteries, but recently, lithium secondary batteries that have almost no memory effect compared to nickel-based secondary batteries, thereby having advantages such as free charging and discharging, very low self-discharge rate, and high energy density, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

Lithium secondary batteries are composed of a positive electrode, a negative electrode, a separator interposed therebetween and an electrolyte, and are classified into a lithium secondary battery (LIB), a polymer lithium-ion battery (PLIB), and the like depending on what positive electrode active material and negative electrode active material are used. Typically, electrodes of these lithium secondary batteries are formed by coating a positive electrode or negative electrode active material on a current collector, such as an aluminum or copper sheet, a mesh, a film, a foil, or the like, and then drying the same. In addition, various types of secondary batteries are equipped with a housing that may protect the battery cells, and may be used in the form of a module in which a plurality of battery cells are accommodated.

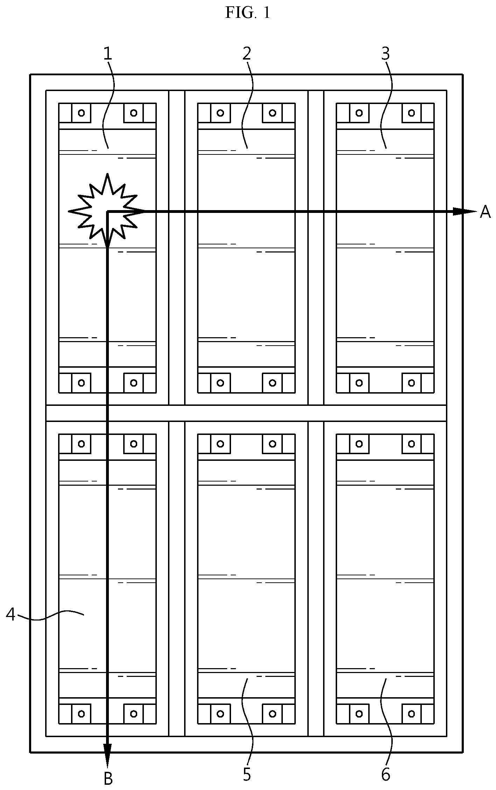

FIG. 1 is a schematic diagram showing a conventional battery pack, in which flame or gas is generated from any one battery module among a plurality of battery modules included in the battery pack and propagated to other battery modules.

Referring to FIG. 1, the flame or gas generated from any battery module 1 among the plurality of battery modules is propagated to neighboring battery modules 2, 3, 4 along the arrow A direction and the arrow B direction, and is finally to the remaining battery modules 5, 6.

Accordingly, the battery modules or the battery pack are damaged, are burned out, or explodes due to a chain reaction of flame and gas to other battery modules, so there is a problem that making it impossible to secure the stability of the battery modules.

### DISCLOSURE

### Technical Problem

The present disclosure is directed to providing a battery pack including battery modules, which may discharge flame or gas generated in a battery cell in a preset direction to prevent the flame or gas from propagating to neighboring battery modules, thereby securing the stability of the battery modules and the battery pack, and is also directed to providing a vehicle including the battery pack.

### Technical Solution

**In** one aspect of the present disclosure, there is provided a battery pack, comprising: a plurality of battery modules, each of which includes a battery cell stack in which a plurality of battery cells are stacked, and a module case configured to accommodate the battery cell stack and having at least one movement hole through which flame and gas move; a pack case configured to accommodate the plurality of battery modules so that an exhaust hole is formed between the battery modules and the pack case; and a flame/gas propagation preventing member disposed between the battery modules and the pack case and configured to prevent flame or gas generated from the battery cell from propagating.

In an embodiment, the module case may include an upper module case, a lower module case, and a side module case, the pack case may include an upper pack case, a lower pack case, and a side pack case, and the flame/gas propagation preventing member may be interposed between the upper module case and the upper pack case to prevent the flame or the gas from propagating to other neighboring battery modules.

In an embodiment, the flame/gas propagation preventing member may be disposed only at a part of a plurality of outer edges of the upper module case.

In an embodiment, the upper module case of the module case may be formed in a rectangular shape, and the flame/gas propagation preventing member may be disposed at an edge where a neighboring battery module may be disposed among the outer edges of the upper module case and may not be disposed at an edge where a neighboring battery module is not disposed.

In an embodiment, the movement hole may be formed in the upper module case.

In an embodiment, the flame/gas propagation preventing member may have a "⊂" shape.

In an embodiment, the exhaust hole may be formed in an area where the flame/gas propagation preventing member is not disposed.

In an embodiment, the flame/gas propagation preventing member may be in close contact with the upper module case and the upper pack case, respectively.

In an embodiment, the flame/gas propagation preventing member may be made of iron, stainless steel (SUS), mica or glass fiber.

In another aspect of the present disclosure, there is also provided a vehicle, comprising the battery pack described above.

### Advantageous Effects

Embodiments of the present disclosure have the effect of discharging flame or gas generated in a battery cell in a preset direction to prevent the flame or gas from propagating to neighboring battery modules, thereby securing the stability of the battery modules and the battery pack.

### DESCRIPTION OF DRAWINGS

FIG. 1 is a schematic diagram showing a conventional battery pack, in which flame or gas is generated from any one battery module among a plurality of battery modules included in the battery pack and propagated to other battery modules.
FIG. 2 is a perspective view showing a plurality of battery modules in a battery pack according to an embodiment of the present disclosure.
FIG. 3 is a perspective view showing that the plurality of battery modules of FIG. 2 are in close contact with an upper pack case of the battery pack.
FIG. 4 is a cross-sectional view, taken along line A-A' of FIG. 3.
FIG. 5 is a cross-sectional view, taken along line B-B' of FIG. 3.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

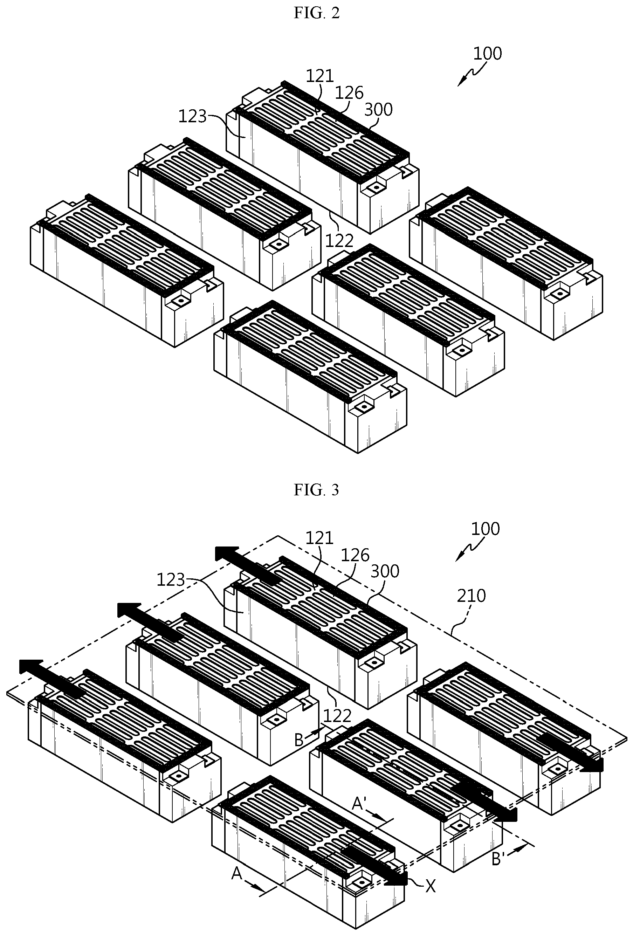

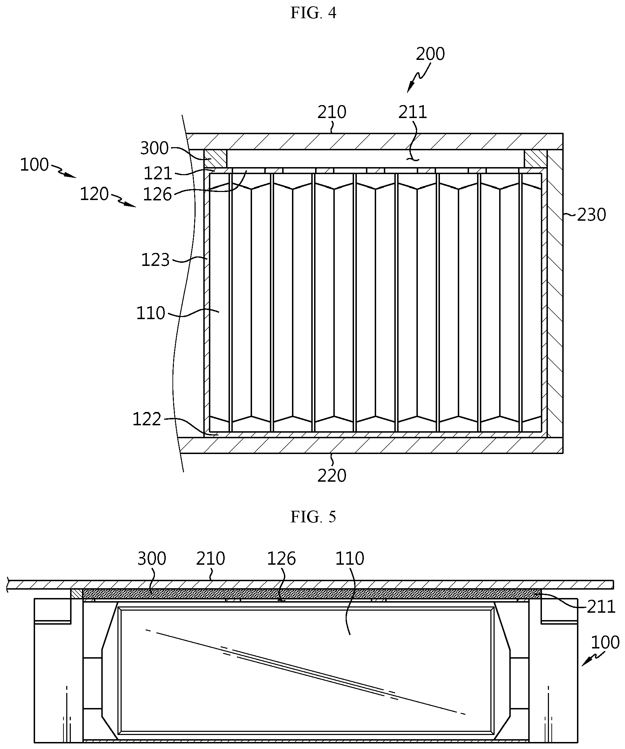

FIG. 2 is a perspective view showing a plurality of battery modules in a battery pack according to an embodiment of the present disclosure, FIG. 3 is a perspective view showing that the plurality of battery modules of FIG. 2 are in close contact with an upper pack case of the battery pack, FIG. 4 is a cross-sectional view, taken along line A-A' of FIG. 3, and FIG. 5 is a cross-sectional view, taken along line B-B' of FIG. 3. In FIGS. 3 and 5, the lower pack case and the side pack case are not depicted.

Referring to the drawings, the battery pack 10 according to an embodiment of the present disclosure includes a battery module 100, a pack case 200, and a flame/gas propagation preventing member 300.

The battery module 100 is provided in plurality, and the plurality of battery modules 100 are arranged in various ways. For example, as shown in FIGS. 2 and 3, the plurality of battery modules 100 may be arranged horizontally and vertically, but are not limited thereto.

The battery module 100 may include a battery cell stack 110 (see FIG. 4) and a module case 120.

The battery cell stack 110 may be configured such that a plurality of battery cells are stacked. The battery cells may have various structures, and the plurality of battery cells may be stacked in various ways.

The battery cell may have a structure in which a plurality of unit cells arranged in the order of positive electrode plate-separator-negative electrode plate, or a plurality of bi-cells arranged in the order of positive electrode plate-separator-negative electrode plate-separator-positive electrode plate-separator-negative electrode plate are stacked according to the battery capacity.

An electrode lead may be provided in the battery cell. The electrode lead is a type of terminal that is exposed to the outside and connected to an external device and may be made of a conductive material. The electrode lead may include a positive electrode lead and a negative electrode lead.

The positive electrode lead and the negative electrode lead may be disposed in opposite directions with respect to the longitudinal direction of the battery cell, or the positive electrode lead and the negative electrode lead may be positioned in the same direction with respect to the longitudinal direction of the battery cell.

The battery cell stack 110 may be provided with a plurality of cartridges (not shown) accommodating the battery cells. Each cartridge (not shown) may be manufactured by injection molding of plastic, and a plurality of cartridges (not shown) in which a receiving portion capable of accommodating the battery cell is formed may be stacked. A cartridge assembly in which a plurality of cartridges (not shown) are stacked may be provided with a connector element or terminal element.

The connector element may include various types of electrical connection parts or connection members for connecting to, for example, a battery management system (BMS, not shown) that may provide data on the voltage or temperature of the battery cell.

Also, the terminal element is a main terminal connected to the battery cell and includes a positive electrode terminal and a negative electrode terminal. The terminal element may be electrically connected to the outside by having a terminal bolt. Meanwhile, the battery cell may have various shapes.

Referring to FIG. 4, the battery cell stack 110 is accommodated in the module case 120. The module case 120 surrounds the battery cells and thereby protects the battery cells from external vibration or shock.

The module case 120 may be formed in a shape corresponding to the shape of the battery cell stack 110. For example, when the battery cell and the battery cell stack 110 are provided in a hexahedral shape with a rectangular cross-section, the module case 120 may also be provided in a hexahedral shape to correspond thereto. However, the present disclosure is not limited thereto.

Here, the module case 120 may include an upper module case 121, a lower module case 122, and a side module case 123. Also, for example, the upper module case 121 of the module case 120 may be formed in a rectangular shape.

A flame/gas propagation preventing member 300, explained later, may be disposed at a part of a plurality of outer edges of the upper module case 121.

In addition, at least one movement hole 126 through which flame and gas move is formed in the module case 120. Referring to FIG. 2, a plurality of movement holes 126 may be formed in the upper module case 121. That is, the flame or gas generated from a battery cell moves out of the module case 120 through the plurality of movement holes 126 formed in the upper module case 121.

The module case 120 may be manufactured, for example, by bending a plate made of a metal material, and accordingly, the module case 120 may be integrally manufactured. When the module case 120 is integrally manufactured, the coupling process is made simple and has the effect of being simplified. Alternatively, the module case 120 may be provided in a separate form and may also be coupled by welding or the like. However, the material of the module case 120 is not limited to a metal material.

Referring to FIG. 4, a plurality of battery modules 100 are accommodated in the pack case 200. The pack case 200 may be configured to include, for example, an upper pack case 210, a lower pack case 220, and a side pack case 230.

In addition, an exhaust hole 211 may be formed between the battery module 100, for example the upper module case 121 of the battery module 100, and the pack case 200, for example the upper pack case 210 of the pack case 200.

As described above, flame or gas that moves out of the module case 120 through the movement hole 126 formed in the module case 120 may be completely discharged out of the pack case 200 through the exhaust hole 211 (see arrow X in FIG. 3).

That is, in FIG. 3, the flame or gas that moves to the outside of the module case 120 (to the upper side in FIG. 3) through the movement hole 126 formed in the module case 120 is blocked by the flame/gas propagation preventing member 300, so the flame or gas cannot move in a specified direction where the flame/gas propagation preventing member 300 is disposed, but is discharged in the arrow X direction through the exhaust hole 211 where the flame/gas propagation preventing member 300 is not disposed.

The flame/gas propagation preventing member 300 is disposed between the battery module 100 and the pack case 200 and prevents the flame or gas generated from the battery cell from propagating. For example, referring to FIGS. 3 and 4, the flame/gas propagation preventing member 300 may be interposed between the upper module case 121 and the upper pack case 210.

In addition, the flame/gas propagation preventing member 300 may be in close contact with the upper module case 121 and the upper pack case 210, respectively.

Here, the flame/gas propagation preventing member 300 may be made of iron, stainless steel (SUS), mica, or glass fiber, but is not limited thereto.

As a result, the flame/gas propagation preventing member 300 may prevent flame or gas from propagating to other neighboring battery modules 100.

Specifically, the flame/gas propagation preventing member 300 may be disposed only at a part of a plurality of outer edges of the upper module case 121.

For example, with reference to FIGS. 2 and 3, when the upper module case 121 of the module case 120 is formed in a rectangular shape, the flame/gas propagation preventing member 300 may be disposed at an outer edge where a neighboring battery module 100 is disposed among the outer edges of the upper module case 121, and may not be disposed at an outer edge where a neighboring battery module 100 is not disposed.

That is, as shown in FIGS. 2 and 3, the flame/gas propagation preventing member 300 may be formed in a "⊂" shape. However, if necessary, the flame/gas propagation preventing member 300 may also be disposed at an edge where a neighboring battery module 100 is not disposed.

In addition, referring to FIGS. 3 to 5, an exhaust hole 211 may be formed at an outer edge of the upper module case 121 where the flame/gas propagation preventing member 300 is not disposed. That is, the exhaust hole 211 may be formed between the upper module case 121 and the upper pack case 210.

Hereinafter, the configuration and operation effects of the battery pack 10 according to an embodiment of the present disclosure will be described.

Inside the pack case 200 of the battery pack 10, a plurality of battery modules 100 are arranged as shown in FIGS. 2 and 3. A movement hole 126 through which flame or gas may move is formed in the upper module case 121 of the battery module 100.

Here, the flame/gas propagation preventing member 300 is in close contact with a part of the plurality of outer edges of the upper module case 121. In other words, the flame/gas propagation preventing member 300 is interposed between the upper module case 121 and the upper pack case 210 and is in close contact therewith.

According to this structure, the flame/gas propagation preventing member 300 may be in close contact with a plurality of outer edges except for a part of the plurality of outer edges of the upper module case 121, as shown in FIG. 3.

In addition, an exhaust hole 211 is formed between the upper module case 121 and the upper pack case 210 in an area where the flame/gas propagation preventing member 300 is not disposed. Here, the battery module 100 is not disposed in a direction facing the exhaust hole 211.

In other words, even if flame or gas is generated from the battery cell inside the battery module 100 and the flame or gas moves out of the battery module 100 through the movement hole 126 of the battery module 100 and is discharged out through the exhaust hole 211, the flame or gas is not propagated to other battery modules 100.

As a result, there is the effect of securing the stability of the battery modules 100 and the battery pack 10.

Meanwhile, a vehicle (not shown) according to an embodiment of the present disclosure may include the battery pack 10 described above, and the battery pack 10 may include the battery module 100. Also, the battery pack 10 according to an embodiment of the present disclosure may be applied to the vehicle (not shown), for example, a predetermined vehicle (not shown) designed to use electricity, such as an electric vehicle or a hybrid electric vehicle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### INDUSTRIAL APPLICABILITY

The present disclosure relates to a battery pack including a battery module, and a vehicle including the same, and is particularly applicable to industries related to secondary batteries.

## Claims

1. A battery pack, comprising:
a plurality of battery modules, each of which includes a battery cell stack in which a plurality of battery cells are stacked, and a module case configured to accommodate the battery cell stack and having at least one movement hole through which flame and gas move;
a pack case configured to accommodate the plurality of battery modules so that an exhaust hole is formed between the battery modules and the pack case; and
a flame/gas propagation preventing member disposed between the battery modules and the pack case and configured to prevent flame or gas generated from the battery cell from propagating.

2. The battery pack according to claim 1,
wherein the module case includes an upper module case, a lower module case, and a side module case,
wherein the pack case includes an upper pack case, a lower pack case, and a side pack case, and
wherein the flame/gas propagation preventing member is interposed between the upper module case and the upper pack case to prevent the flame or the gas from propagating to other neighboring battery modules.

3. The battery pack according to claim 2,
wherein the flame/gas propagation preventing member is disposed only at a part of **a** plurality of outer edges of the upper module case.

4. The battery pack according to claim 3,
wherein the upper module case of the module case is formed in a rectangular shape, and the flame/gas propagation preventing member is disposed at an edge where a neighboring battery module is disposed among the outer edges of the upper module case and is not disposed at an edge where a neighboring battery module is not disposed.

5. The battery pack according to claim 4,
wherein the movement hole is formed in the upper module case.

6. The battery pack according to claim 5,
wherein the flame/gas propagation preventing member has a "⊂" shape.

7. The battery pack according to claim 5,
wherein the exhaust hole is formed in an area where the flame/gas propagation preventing member is not disposed.

8. The battery pack according to claim 2,
wherein the flame/gas propagation preventing member is in close contact with the upper module case and the upper pack case, respectively.

9. The battery pack according to claim 1,
wherein the flame/gas propagation preventing member is made of iron, stainless steel (SUS), mica or glass fiber.

10. A vehicle, comprising the battery pack according to any one of claims 1 to 9.
